## Europäisches Patentamt
## European Patent Office
## Office européen des brevets

(19)

(11) Veröffentlichungsnummer: **0 171 444**
**B1**

(12) **EUROPÄISCHE PATENTSCHRIFT**

(45) Veröffentlichungstag der Patentschrift:
**01.06.88**

(51) Int. Cl.⁴: **C 04 B 35/58**

(21) Anmeldenummer: **84109589.6**

(22) Anmeldetag: **11.08.84**

(54) Verfahren zur Herstellung eines vollkristallinen Sinterkörpers aus Siliciumnitrid.

(43) Veröffentlichungstag der Anmeldung:
**19.02.86 Patentblatt 86/8**

(45) Bekanntmachung des Hinweises auf die Patenterteilung:
**01.06.88 Patentblatt 88/22**

(84) Benannte Vertragsstaaten:
**AT BE CH DE FR GB IT LI LU NL SE**

(56) Entgegenhaltungen:
**EP - A - 0 087 888**
**FR - A - 2 359 097**
**US - A - 4 184 884**
**US - A - 4 438 051**

(73) Patentinhaber: **Hutschenreuther AG, D-8672 Selb (DE)**

(72) Erfinder: **Mathis, Bruno, Dr., Am Reuthberg 4,
D-8672 Selb (DE)**
Erfinder: **Hahn, Christoph, Dr., Bei der Linde 20,
D-8672 Selb (DE)**

(74) Vertreter: **Patentanwälte Czowalla . Matschkur +
Partner,
Dr.-Kurt-Schumacher-Strasse 23 Postfach 9109,
D-8500 Nürnberg 11 (DE)**

**Beschreibung**

Die Erfindung richtet sich auf ein Verfahren zur Herstellung eines dichten, bei hohen Temperaturen kriechfesten, vollkristallinen Sinterkörpers, aus im wesentlichen einer zu β-Siliciumnitrid isomorphen Phase und Yttrium-Aluminiumgranat, wobei aus einer Pulvermischung, bestehend aus Siliciumnitrid, Yttriumoxid, Aluminiumnitrid und Siliciumdioxid, sowie einem die Kristallisation von Yttrium-Aluminiumgranat aus der sialonischen Schmelze stark fördernden Stoff und organischen Bindemitteln ein Vorkörper geformt und unter Austreiben der Bindemittel in einem ein- oder mehrstufigen Sinterprozess dichtgesintert wird.

Nichtoxidische Keramiken wurden bisher vielfach untersucht und weiterentwickelt. Der Grund für das Interesse an diesen Werkstoffen ist vor allem in ihrer Eignung als mechanisch, thermisch, chemisch und abrasiv hochbelastbare Bauteile in weiten Bereichen der Technik, insbesondere beim Bau von Verbrennungskraftmaschinen, zu sehen. Keramische Materialien auf der Basis von Siliciumnitrid zählen zur Gruppe dieser Werkstoffe. Sie zeichnen sich durch besonders hohe mechanische Festigkeit bei gegenüber Metallen vergleichsweise geringer Dichte aus.

Die grundlegende Schwierigkeit bei der Herstellung praktisch verwendbarer Bauteile aus Siliciumnitrid resultiert aus der Natur der kovalenten Bindung dieser Substanz. Es gelingt daher nicht, reines Siliciumnitrid bei Temperaturen unterhalb der Zersetzungstemperatur des Materials zu sintern, also zu einem weitgehend porenfreien, mechanisch hochfesten Körper zu verdichten.

Es sind verschiedene der Fachwelt bekannte Wege zur Umgehung dieser Schwierigkeiten beschritten worden, wobei die einzelnen Herstellungsverfahren eine oder auch mehrere charakteristische Massnahmen zur Umgehung des Problems der mangelnden Sinteraktivität vorsehen. Diese Verfahren führen zu unterschiedlichen Eigenschaften der nach ihnen hergestellten keramischen Körper, und sie unterschieden sich vor allem in dem den einzelnen Verfahren zugrundeliegenden technischen Aufwand und damit auch in ihrer Wirtschaftlichkeit. Das Schwergewicht der Verfahrensentwicklung auf diesem Gebiet hat sich zusehends auf das drucklose Sintern von Pulvergemischen aus Siliciumnitrid und oxidischen oder nichtoxidischen Sinterhilfsstoffen verlagert. Voraussetzung dafür ist die kommerzielle Verfügbarkeit von geeigneten, d.h. sehr feinen und reinen Siliciumnitridpulvern.

Drucklos gesinterte Körper aus Siliciumnitrid (SSN) weisen generell höhere Dichten und Festigkeiten auf als solche, die nach dem sogenannten Reaktionsbindungsverfahren (RBSN) hergestellt werden. Andererseits hat das drucklose Sintern den Vorzug grösserer Wirtschaftlichkeit gegenüber dem auch bei Siliciumnitrid mit gutem Erfolg anwendbaren Heisspressverfahren (HPSN), weil beim Heisspressen die Formgebung und die Wärmebehandlung zu einem Verfahrensschritt zusammengefasst sind. Wirtschaftliche Formgebungsverfahren zeichnen sich aber durch eine schnelle Aufeinanderfolge der Formung einzelner oder gleichzeitig einer kleinen Anzahl identischer Körper aus, während die Wirtschaftlichkeit zeitlich ausgedehnter Wärmebehandlungsprozesse auf der gleichzeitigen Verarbeitung sehr vieler Werkstücke beruht.

Das Heissisostatpressen (HIPSN) schliesslich ist nur auf Körper mit gasdichter Oberfläche anwendbar. Will man dieses Verfahren auf Werkstücke anwenden, welche aus Pulvermischungen vorgeformt sind, so ist es notwendig, diese Formlinge mit temperaturbeständigen, gasdichten, verformbaren Hüllen zu überziehen. Das Aufbringen und Entfernen dieser Hüllen ohne Beschädigung des Werkstücks erfordert einen hohen technischen Aufwand, der die Wirtschaftlichkeit des Verfahrens beeinträchtigt.

Das drucklose Sintern selbst stellt nur einen Schritt in einem vollständigen Verfahrensablauf zur Herstellung von Körpern aus pulverförmigen Stoffen dar. In der Möglichkeit, diesen Sinterprozess mit einer Vielfalt anderer Verfahrensschritte, die aus der keramischen und pulvermetallurgischen Technologie bekannt sind, problemlos zu verbinden, liegt ein grosser Vorteil dieser Sintermethode.

Entscheidend für den Erfolge des drucklosen Sinterns von Siliciumnitrid ist die sorgfältige Auswahl der dem Siliciumnitridpulver zugesetzten Sinterhilfsstoffe nach Art, Eigenschaft und Menge. Zu den häufigsten verwendeten Stoffen dieser Art zählen Magnesiumoxid, Aluminiumoxid und Yttriumoxid, welche einzeln oder im Gemisch oder in Kombination mit weiteren Stoffen verwendet werden. Obwohl mittlerweile eine grosse Vielfalt von Stoffgemischen bekannt ist, die überwiegend Siliciumnitrid enthalten und durch druckloses Sintern zu Körpern hoher Dichte und Festigkeit gebracht werden können, haftet den auf diese Weise hergestellten Körpern ein für viele Einsatzzwecke schädlicher Mangel an. Die mechanische Festigkeit dieser Körper nimmt bei hohen Einsatztemperaturen >1000°C drastisch ab, zudem zeigen diese Körper die Erscheinung, dass sie sich bei hohen Temperaturen unter Belastung mehr oder weniger stark plastisch deformieren, also kriechen. Gemeinsame Ursache dieser Erscheinungen ist das Vorhandensein von glasig-amorphen Phasen zwischen den kristallinen Partikeln des Sinterkörpers. Diese glasigen Phasen entstehen durch Erstarren sialonischer Schmelzen, die sich während des Sinterns bilden und die das Sintern von Siliciumnitrid überhaupt erst ermöglichen. Bestandteile dieser Schmelzen sind sauerstoffhaltige Siliciumverbindungen, welche als dünne Schicht auf den Körnern des Siliciumnitridpulvers immer vorhanden sind, weiter die dem Siliciumnitrid zugesetzten Sinterhilfsstoffe sowie ein gewisser Anteil an gelöstem Siliciumnitrid. Die Wirkung dieser Sinterhilfsstoffe auf den Sinterprozess beruht demnach auf der gezielten Beeinflussung der Eigenschaften von Schmelzen der beschriebenen Art.

Es ist bevorzugtes Ziel der Weiterentwicklung der Verfahren zur drucklosen Sinterung von Siliciumnitridkörpern, diese sialonische Schmelze in einer Weise zu modifizieren, dass sie beim Abkühlen nach dem Dichtsintern des Körpers in Form temperaturbeständiger Kristalle erstarrt, weil Kristalle generell bis kurz unterhalb ihrer Schmelztemperatur mechanisch belastbar sind, ohne wensentliche plastische Deformationen oder einen sprunghaften Festigkeitsabfall zu zeigen. Dieses Verhalten von Kristallen ist deutlich günstiger als jenes amorpher Gläser, die über einen weiten Temperaturbereich hinweg allmählich niedrig-viskoser werden und damit ihre Festigkeit zunehmend verlieren. Die Eigenschaft sialonischer Schmelzen, überwiegend glasig zu erstarren, steht dem angestrebten Ziel hinderlich im Wege.

Während die überwiegende Zahl der aus der Patentliteratur bekannten Sinterhilfsstoffe für Siliciumnitrid in erster Linie unter dem Gesichtspunkt eingesetzt werden, ein vollständiges Sintern des Pulvergemisches zu ermöglichen, ist es zur Erfüllung der oben beschriebenen Zielsetzung dieser Anmeldung erforderlich, die Sinterhilfsstoffe ihrer Art nach so auszuwählen, dass sie das kristalline Erstarren der sialonischen Schmelze fördern. Es ist beispielsweise bekannt, dass Magnesiumoxid als Zusatz ein besonders wirkungsvolles Sinterhilfsmittel für Siliciumnitrid ist, aber das Auskristallisieren sialonischer Schmelzen stark behindert.

Kristalle weisen meist enge, oft stöchiometrische Bereiche ihrer Zusammensetzung auf. Es ist daher erforderlich, bei der Herstellung einer Siliciumnitrid enthaltenden Pulvermischung, die gesintert werden soll, ohne dass der fertige Körper glasig-amophe Phasen enthält, die Mengenverhältnisse der Zusatzstoffe untereinander so zu wählen, dass die Stöchiometrie der angestrebten Kristallphasen gewährleistet ist. Dabei ist auch der Gehalt an sauerstoffhaltigen Siliciumverbindungen in der Pulvermischung, insbesondere in Form von Siliciumdioxid, in die Stoffbilanz mit einzubeziehen.

Diesem Gesichtspunkt tragen die meisten der bekanntgewordenen Verfahren zur Herstellung gesinterter Körper aus Siliciumnitrid insofern nicht Rechnung, als sie für die Menge der Zusatzstoffe jeweils grosse Bereiche angeben. Daraus resultiert aber keine dahin gehende technische Lehre, ein bestimmtes, zur Erzielung möglichst vollständiger Kristallisation der erstarrten Schmelzphase erforderliches Mengenverhältnis der Zusatzstoffe zu ermitteln. Beispielsweise werden in der JA-A 124 102/81 (EP-A 0 071 997) Mengenanteile von jeweils 0,1–10 Gew.% für die Sinterhilfsmittel Yttriumoxid, Aluminiumoxid und Aluminiumnitrid und 0,1–5 Gew.% für einen oder mehrere Stoffe einer grösseren Gruppe von Oxiden vorgeschlagen, wobei diese Anteile auf das Gesamtgewicht der Pulvermischung bezogen sind.

Der Erfindung liegt daher die Aufgabe zugrunde, ungeachtet der aufgeführten Schwierigkeiten auf wirtschaftliche Weise einen überwiegend aus Siliciumnitrid bestehenden, porenfreien, bei hohen Temperaturen kriechfesten Sinterkörper herzustellen, der ausser einer mit $\beta$-Siliciumnitrid isomorphen Phase lediglich andere, kristalline, nicht aber in feststellbarem Umfang glasig-amorphe Phasen enthält. Es ist jedoch ohne erhebliche erfinderische Anstrengung nicht möglich, aus dem grossen, sich aus diesen Mengenanteilen ergebenden Mischungsbereichen jene herauszufinden, welche – wenn überhaupt – zur vollkristallinen Erstarrung der Schmelzphase führen.

In einer Arbeit von Prochoska und Greskovich (1978 «Development of a Sintering Process for High-Performance Silicon Nitride»; General Electric Corporate Research and Development, Schenectady, New York, Army Materials and Mechanics Research Center Contract, Report No. AMMRC TR 78-32 [AD-A 061 880]) wird berichtet, dass der Sinterhilfsstoff $BeSiN_2$ zu gesinterten Körpern aus Siliciumnitrid führt, bei denen die glasige Korngrenzphase kristallin erstarrt. Einer industriellen Nutzung dieser Erkenntnis steht allerdings die befürchtete Toxizität berylliumhaltiger Verbindungen entgegen. Andererseits wird seit einigen Jahren in der Fachwelt über den Vorschlag diskutiert, das Auskristallisieren der sich beim Sintern von Siliciumnitrid bildenden Schmelzen durch die Ausbildung der Verbindung Yttrium-Aluminiumgranat ($3 Y_2O_3 \cdot 5 Al_2O_3$) zusammen mit kristallinen Si–Al–O–N-Verbindungen zu erreichen (so beispielsweise bei Popper, P., 1983, Sintering of Silicon Nitride, A Review, in: Progress in Nitrogen Ceramics Ed. by F.L. Riley, Martinus Nijhoff Publishers). Für diesen Vorschlag spricht u.a. die Tatsache, dass Mischungen von aluminiumyttriumhaltigen Stoffen als wirkungsvolles Sinterhilfsmittel für Siliciumnitrid mehrfach erkannt wurden, beispielsweise in EP-A 0 015 421, EP-A 0 045 518, EP-A 0 071 997, EP-A 0 073 523 oder in den DE-C 2 353 093, DE-C 2 528 869, und dass Yttrium-Aluminiumgranat eine hohe Schmelztemperatur aufweist.

Bei früheren Untersuchungen wurde in Übereinstimmung mit Literaturangaben festgestellt, dass bei Verwendung von Yttriumoxid-Aluminiumoxid-Gemischen als Sinterhilfsstoff für Siliciumnitrid vorzugsweise glasig-amorphe Korngrenzphasen erhalten werden. Bei gelegentlich vorkommender, teilweiser Auskristallisierung dieser Glasphase bildete sich jedoch nicht Yttrium-Aluminiumgranat, sondern ein Gemisch verschiedener Yttrium-Aluminiumoxynitride, wie aufgrund von Röntgenstrukturanalysen pulverisierter, gesinterter Probekörper festgestellt wurde. Von manchen dieser Verbindungen ist bekannt, dass sie stark oxidationsempfindlich sind und zur Zerstörung der sie enthaltenden Sinterkörper bei Temperaturen im Bereich der für Siliciumnitridkörper vorgesehenen Einsatzbedingungen führen (siehe beispielsweise S.C. Singhal, pp. 607–626, in «Nitrogen Ceramics», F.L. Riley, ed. Norrdhoff, Leyden, 1977).

Im Verlauf der weiteren Bemühungen stellte sich heraus, dass die Glasphase deutlich stärker rekristallisierte, wenn statt eines Yttriumoxid-Aluminiumoxid-Pulvergemisches ein Yttriumoxid-Aluminiumnitridgemisch dem Siliciumnitridpulver als Sinteradditiv zugesetzt wurde. Dies bedeutet zwar, dass Aluminiumoxid die Entglasung verhindert. Gleichwohl war, obwohl diese Tatsache im Bereich der Glasherstellung bekannt ist, die Übertragbarkeit dieser Erkenntnis auf den Fall stickstoffhaltiger Glasschmelzen nicht vorhersehbar. Dieser Austausch von Aluminiumoxid gegen Aluminiumnitrid führte weiter dazu, dass sich als Kristallisationsprodukt nicht mehr Yttrium-Aluminiumoxinitride ergaben, sondern Yttrium-Aluminiumgranat. Quantitative Untersuchungen des Gehalts an Yttrium-Aluminiumgranat an pulverisierten, gesinterten Probekörpern, welche aus Yttriumoxid-Aluminiumnitrid-Siliciumnitrid-Pulvergemischen hergestellt worden waren, wurden durch Vergleich der Röntgenbeugungsdiagramme mit jenen von Pulvermischungen aus Siliciumnitrid und synthetisch hergestelltem Yttriumaluminiumgranat in abgestuften, bekannten Verhältnissen durchgeführt. Dabei wurde festgestellt, dass die Korngrenzenphase nie vollständig auskristallisierte, obwohl die Sinterhilfsmittel in einem auf vollständige Kristallisation abgestimmten Verhältnissen zugesetzt worden waren.

Es wurden daher Untersuchungen durchgeführt mit dem Ziel, Stoffe zu identifizieren, welche in Form geringfügiger Zusätze zur sinterfähigen Pulvermischung diese Auskristallisation fördern würden. Als wirksam erwiesen sich von den untersuchten Substanzen dabei Titandioxid, Phosphorpentoxid (eingebracht in Form von Yttriumphosphat, $YPO_4$). Anteile von bis zu einem Gewichtsteil dieser Oxide bezogen auf 10 Gewichtsteile Yttriumoxid in der Pulvermischung erwiesen sich als positiv rekristallisierend wirksam.

Probekörper, welche nach diesen Gesichtspunkten aus Pulvergemischen mit unterschiedlichen Gesamtgehalten an Yttriumoxid, Aluminiumnitrid und Titandioxid in Siliciumnitridpulver hergestellt wurden, wiesen nach dem Sintern deutliche Unterschiede in der Dichte auf bei generell hohem Kristallisationsgrad der Korngrenzphase. Es zeigte sich, dass die höchsten Dichten der gesinterten Körper erreicht wurden, wenn die Zusammensetzung der sich während des Sintervorganges zwischen den Siliciumnitridkörnern bildenden Schmelze näherungsweise dem eutektischen Gemisch aus 75 Masseanteilen $Y_2Si_2O_7$ und 25 Masseanteilen $SiAl_2O_2N_2$ entsprach. Daraus ergibt sich die Forderung, bei der Herstellung eines im Sinne der Aufgabestellung geeigneten Pulvergemisches auch den Gehalt an $SiO_2$ zu berücksichtigen bzw. diesen zu beeinflussen.

Erst die Anwendung der erfindungsgemässen Erkenntnis, die Ausgangsstoffe Aluminiumnitrid, Yttriumoxid und Siliciumdioxid im Gewichtsverhältnis 0,960 ± 0,096 zu 1,337 ± 0,134 zu 1 zu verwenden, führte überraschenderweise zu einer befriedigenden Lösung der gestellten Aufgabe.

Es wurde festgestellt, dass eine auf den Körpern des Siliciumnitridpulvers haftende Schicht von Siliciumdioxid zu einer weiteren Verbesserung der Sinteraktivität des Pulvergemisches führte, als durch Zumischung pulverförmiger Silikate zu erreichen war. Ausserdem lässt sich der Gesamtgehalt an Siliciumdioxid in der Pulvermischung durch Glühen der Mischung oder vorzugsweise durch vor dem Dichtsintern erfolgendes Glühen der aus der Pulvermischung hergestellten Vorkörper in sauerstoffhaltiger Atmosphäre kontrollierbar und reproduzierbar steigern.

Die Erfindung weist auf ein im Sinne der Aufgabenstellung bevorzugtes Verfahren zur Herstellung eines sinterfähigen Pulvergemisches aus Siliciumnitrid, Yttriumoxid, Aluminiumnitrid, Siliciumdioxid und einem kristallisationsfördernden Stoff hin, bei dem die Stoffe Yttriumoxid, Aluminiumnitrid und Siliciumdioxid in einem Verhältnis gemischt werden, welches der folgenden Reaktionsgleichung näherungsweise entspricht.

$$Y_2O_3 + 2,812\,SiO_2 + 3,957\,ALN \rightarrow$$
$$\rightarrow Y_2Si_2O_7 + 0,812\,SiAl_2O_2N_2 + 2,333\,ALN \rightarrow \rightarrow \tfrac{1}{3}$$
$$(3\,Y_2O_3 \cdot 5\,Al_2O_3 + 0,573\,Si_{6-x}Al_xO_xN_{8-x}$$
$$x = 1,09$$

Als die Kristallisation von Yttrium-Aluminiumgranat aus der sialonischen Schmelze besonders fördernde Stoffe wurden gemäss der Erfindung Titandioxid und bei der Sintertemperatur nichtflüchtige Phosphorverbindungen erkannt.

Ein sich der vorstehenden Reaktionsgleichung bedienendes Verfahren wird im nachfolgenden Anwendungsbeispiel näher erläutert:

Beispiel

200 g Siliciumnitridpulver (spezifische Oberfläche 23 m²/g; Verhältnis α-Phase zu β-Phase 94:3; $SiO_2$-Gehalt 3%; C-Gehalt <0,2%; Kationenverunreinigung <0,05%),

13,4 g Yttriumoxid (99,9% rein, mittlere Teilchengrösse 0,5 μm),

9,6 g Aluminiumnitrid (99% rein, mittlere Teilchengrösse 0,6 μm),

0,5 g $TiO_2$ (reinst, feingepulvert),

200 g Methanol,

20 g Polyäthylenglykol, pastös,

werden in einem aus organischem Kunststoff bestehenden Gefäss unter Zuhilfenahme von mit Teflon überzogenen Stahlkugeln als Mahlkörper durch Schütteln homogen vermischt. Die auf diese Weise hergestellte bindemittelhaltige Pulversuspension wird auf flache Schalen ausgegossen und in einem beheizten Schrank getrocknet. Die locker agglomerierte Pulvermasse wird zerstossen und durch ein Sieb mit 0,5 mm Maschenweite gedrückt.

Dieses Granulat wird in einem Stahlwerkzeug bei einem Druck von 150 MPa zu flachen Platten mit den Abmessungen 60 × 60 × 5 mm³ verpresst, welche eine Dichte von 63% der sich aufgrund der Mischung der anorganischen Bestandteile ergebenden theoretischen Dichte aufweisen. Aus den gepressten Platten wird dann in sauerstoffreier, strömender Stickstoffatmosphäre bei 500°C das temporäre Bindemittel ausgetrieben. Dabei ergeben sich deutliche Rückstände an Kohlenstoff. Diese werden durch anschliessendes, mehrstündiges Glühen in Luft bei 600°C entfernt. Die Dauer dieses Glühprozesses wird aufgrund von Vorversuchen derart bemessen, dass die verglühten Platten einen Siliciumdioxidgehalt von 4,45 g, bezogen auf 100 g Gesamtgewicht, aufweisen. Dieser Wert ist durch Bestimmung des Sauerstoffgehaltes und unter Berücksichtigung des Gehaltes an Yttrium- und Titanoxid zu verifizieren.

Die verglühten Probeplatten, welche einen Kohlenstoffgehalt von nur mehr 0,1% aufweisen, werden in einem durch einen Deckel verschlossenen Behälter aus einem temperaturbeständigen Material aufeinandergestapelt und der Behälter in einem elektrisch beheizten Widerstandsofen innerhalb von sechs Stunden von Raumtemperatur auf eine Temperatur von 1690°C gebracht, dort drei Stunden lang belassen und dann über 15 Stunden hinweg wieder auf Raumtemperatur abgekühlt. Während dieser Zeit ist der vorher evakuierte, verschlossene Ofen mit Stickstoff von etwa Atmosphärendruck gefüllt.

Die gesinterten Platten werden mittels Diamantscheibe beidseitig plangeschliffen und daraus mit einer Diamanttrennscheibe Probestäbe der Abmessungen 3,5 × 4,5 × 45 mm gesägt. Die Messung der Dichte dieser Probestäbe durch die Wasserimmersionsmethode führt zu einem Wert von 99,4 ± 0,1% der Dichte des Ausgangspulvergemisches.

Die Prüfung der Biegebruchfestigkeit an diesen Probestäben (3-Punkt-Biegeversuch, Auflagenabstand 40 mm, Vorschubgeschwindigkeit 1 mm/min, Belastungsrichtung der Stäbe: hochkant, geschliffene Flächen senkrecht zur Belastungsrichtung) ergibt einen Mittelwert von 729 N/mm² bei einem Weibullmodul von 17, ermittelt an 18 Proben.

Die Röntgenstrukturanalyse an pulverisierten Probestäben ergibt als Phasenbestand $\beta$-$Si_3N_4$ und Yttriumaluminiumgranat. Weitere Linien treten nicht auf. Aus dem Vergleich mit Röntgenstrukturdiagrammen von Pulvermischungen aus Siliciumnitrid und Yttrium-Aluminiumgranat in bekanntem Mischungsverhältnis ergibt sich, dass im Rahmen der Messgenauigkeit des Verfahrens die gesamte, der Zusammensetzung der Ausgangspulvermischung entsprechende Menge an Korngrenzenphase auskristallisiert ist.

## Patentansprüche

1. Verfahren zur Herstellung eines dichten, bei hohen Temperaturen kriechfesten, vollkristallinen Sinterkörpers, aus im wesentlichen einer zu $\beta$-Siliciumnitrid isomorphen Phase und Yttrium-Aluminiumgranat, wobei aus einer Pulvermischung, bestehend aus Siliciumnitrid, Yttriumoxid, Aluminiumnitrid und Siliciumdioxid, sowie einem die Kristallisation von Yttrium-Aluminium granat aus der sialonischen Schmelze stark fördernden Stoff und organischen Bindemitteln ein Vorkörper geformt und unter Austreiben der Bindemittel in einem ein- oder mehrstufigen Sinterprozess dichtgesintert wird, dadurch gekennzeichnet, dass die Ausgangsstoffe Aluminiumnitrid, Yttriumoxid und Siliciumdioxid im Gewichtsverhältnis 0,960±0,096 zu 1,337±0,134 zu 1 verwendet werden.

2. Verfahren nach Anspruch 1, dadurch gekennzeichnet, dass das Siliciumdioxid als dünne, die Siliciumnitridkörner umhüllende Schicht in die Pulvermischung eingebracht wird.

3. Verfahren nach Anspruch 1 oder 2, dadurch gekennzeichnet, dass der Vorkörper vor dem Dichtsintern in sauerstoffhaltiger Atmosphäre geglüht wird.

4. Verfahren nach den Ansprüchen 1–3, dadurch gekennzeichnet, dass Titandioxid als die Kristallisation von Yttrium-Aluminiumgranat aus sialonischer Schmelze fördernder Stoff eingesetzt wird.

5. Verfahren nach den Ansprüchen 1–3, dadurch gekennzeichnet, dass eine Titanverbindung als die Kristallisation von Yttrium-Aluminiumgranat aus sialonischer Schmelze fördernder Stoff eingesetzt und der Vorkörper in sauerstoffhaltiger Atmosphäre geglüht wird.

6. Verfahren nach Anspruch 4 oder 5, dadurch gekennzeichnet, dass das Gewichtsverhältnis von Titandioxid zu Yttriumoxid im Vorkörper < als 1:10 ist.

7. Verfahren nach den Ansprüchen 1–3 dadurch gekennzeichnet, dass eine bei der Sintertemperatur nicht flüchtige Phosphorverbindung als die Kristallisation von Yttrium-Aluminiumgranat aus silikatischer Schmelze fördernder Stoff eingesetzt wird.

8. Verfahren nach Anspruch 7, dadurch gekennzeichnet, dass als Phosphorverbindung Yttriumphosphat eingesetzt wird und dass die dieser Menge Yttriumphosphat entsprechende Menge Yttriumoxid bei der Herstellung der Pulvermischung im Verhältnis nach Anspruch 1 berücksichtigt wird.

9. Verfahren nach den Ansprüchen 7 und 8, dadurch gekennzeichnet, dass die Menge der Phosphorverbindung, berechnet als $P_2O_5$, im Vorkörper kleiner ist als 1 Masseanteil auf 10 Massenanteile Yttriumoxid.

## Claims

1. Process for the preparation of a dense, fully crystalline sinter compact which is creep-resistant at high temperatures and essentially comprises a phase which is isomorphous to silicon nitride and yttrium-aluminium garnet, a preliminary compact being formed from a powder mixture consisting of silicon nitride, yttrium oxide, aluminium nitride and silicon dioxide, a substance which greatly promotes the crystallisation of yttrium-aluminium garnet from the sialonic melt and organic binders, and the preliminary compact being subjected to dense sintering in a single or multi-stage sintering process, the binders being driven off, characterised in that the starting substances aluminium nitride, yttrium oxide and silicon dioxide are used in a weight ratio of $0,960 \pm 0,096$ to $1,337 \pm 0,134$ to 1.

2. Process according to claim 1, characterised in that silicon dioxide is introduced into the powder mixture as a thin layer which coats the silicon nitride particles.

3. Process according to claim 1 or 2, characterised in that the preliminary compact is annealed in an oxygen-containing atmosphere before the dense sintering.

4. Process according to claims 1–3, characterised in that titanium dioxide is used as the substance which promotes the crystallisation of yttrium-aluminium garnet from the sialonic melt.

5. Process according to claims 1–3, characterised in that a titanium compound is used as the substance which promotes the crystallisation of yttrium-aluminium garnet from the sialonic melt and the preliminary compact is annealed in an oxygen-containing atmosphere.

6. Process according to claim 4 or 5, characterised in that the weight ratio of titanium dioxide to yttrium oxide in the preliminary compact is 1:10.

7. Process according to claims 1–3, characterised in that a phosphorus compound which is not volatile at the sintering temperature is used as the substance which promotes the crystallisation of yttrium-aluminium garnet from the silicate melt.

8. Process according to claim 7, characterised in that yttrium phosphate is used as the phosphorus compound and in that the amount of yttrium oxide corresponding to this amount of yttrium phosphate is taken into consideration in the ratio according to claim 1 in the preparation of the powder mixture.

9. Process according to claims 7 and 8, characterised in that the amount of the phosphorus compound, calculated as $P_2O_5$, in the preliminary compact is less than 1 part by weight per 10 parts by weight of yttrium oxide.

**Revendications**

1. Procédé pour la fabrication d'un corps fritté dense, entièrement cristallisé, résistant au fluage à haute température, constitué pour l'essentiel d'une phase isomorphe au nitrure de β-silicium et d'un grenat d'yttrium-aluminium, dans lequel une préforme est façonnée à partir d'un mélange de poudres constitué de nitrure de silicium, d'oxyde d'yttrium, de nitrure d'aluminium et de dioxyde de silicium ainsi que d'une substance favorisant fortement une cristallisation du grenat d'yttrium-aluminium dans la masse fondue sialonique, ainsi que de liants organiques, cette préforme étant ensuite frittée jusqu'à densité maximale avec expulsion des liants dans le cadre d'un processus de frittage en une ou plusieurs étapes, caractérisé en ce que les substances de départ nitrure d'aluminium, oxyde d'yttrium et dioxyde de silicium sont utilisés selon la proportion pondérale $0,960 \pm 0,096/1,337 \pm 0,134/1$.

2. Procédé selon la revendication 1, caractérisé en ce que le dioxyde de silicium est introduit dans le mélange pulvérulent sous la forme d'une couche mince qui gaine les grains de nitrure de silicium.

3. Procédé selon la revendication 1 ou 2, caractérisé en ce que la préforme est calcinée avant le frittage jusqu'à densité maximale, dans une atmosphère contenant de l'oxygène.

4. Procédé selon les revendications 1 à 3, caractérisé en ce qu'on utilise du dioxyde de titane en tant que substance favorisant la cristallisation du grenat d'yttrium-aluminium dans la masse fondue sialonique.

5. Procédé selon les revendications 1 à 3, caractérisé en ce qu'on utilise un composé du titane en tant que substance favorisant la cristallisation du grenat d'yttrium-aluminium dans la masse fondue sialonique, et que la préforme subit un recuit dans une atmosphère contenant de l'oxygène.

6. Procédé selon la revendication 4 ou 5, caractérisé en ce que le rapport pondéral entre le dioxyde de titane et l'oxyde d'yttrium dans la préforme est <1:10.

7. Procédé selon les revendications 1 à 3, caractérisé en ce qu'on utilise en tant que substance favorisant la cristallisation du grenat d'yttrium-aluminium dans la masse fondue sialonique un composé du phosphore non volatil à la température de frittage.

8. Procédé selon la revendication 7, caractérisé en ce qu'on utilise comme composé du phosphore du phosphate d'yttrium et que l'on prend en compte, lors de la fabrication du mélange pulvérulent, le rapport indiqué dans la revendication 1 pour la quantité d'oxyde d'yttrium correspondant à cette quantité de phosphate d'yttrium.

9. Procédé selon les revendications 7 et 8, caractérisé en ce que la quantité du composé du phosphore, calculée sous forme de $P_2O_5$, dans la préforme est inférieure à 1 partie en masse pour 10 parties en masse d'oxyde d'yttrium.